Europäisches Patentamt

European Patent Office

Office européen des brevets

(19)

(11) Veröffentlichungsnummer: **0 124 764**
**A1**

(12)

# EUROPÄISCHE PATENTANMELDUNG

(21) Anmeldenummer: **84103696.5**

(22) Anmeldetag: **04.04.84**

(51) Int. Cl.³: **B 65 G 51/24**

(30) Priorität: **11.04.83 DE 3312926**

(43) Veröffentlichungstag der Anmeldung:
**14.11.84 Patentblatt 84/46**

(84) Benannte Vertragsstaaten:
**AT BE CH FR GB IT LI LU NL SE**

(71) Anmelder: **Aerocontact GmbH & Co. KG**
**Plochinger Strasse 54**
**D-7301 Deizisau(DE)**

(72) Erfinder: **Blessing, Albert**
**Schurwaldstrasse 21**
**D-7302 Ostfildern 1(DE)**

(74) Vertreter: **Rüger, Rudolf, Dr.-Ing. et al,**
**Webergasse 3 Postfach 348**
**D-7300 Esslingen/Neckar(DE)**

(54) Biegsames Rohr für Rohrpostanlagen.

(57) Ein biegsames Rohr (16, 17) für Rohrpostanlagen enthält einen luftdichten, flexiblen, schlauchartigen Mantel (2), der an zwei miteinander zu verbindenden steifen Fahrrohrabschnitten (12, 13, 14) befestigt wird und eine in einem Fahrrohrabschnitt (12, 13, 14) ankommende Rohrpostbüchse (16) in einen anderen Fahrrohrabschnitt (12, 13, 14) weiterleitet.

Um eine geräuscharme Führung der Rohrpostbüchse (16) in dem biegsamen Rohr (16, 17) zu gewährleisten, enthält der Mantel (2) einen oder mehrere kreisförmige Ringe (3) die sich zumindest in der Lücke zwischen den beiden durch das biegsame Rohr (16, 17) miteinander verbundenen Fahrrohrabschnitten (12, 13, 14) befinden und im gestreckten Zustand des biegsamen Rohres (16, 17) in dessen Achsrichtung koaxial und im Abstand zueinander angeordnet sind.

Fig. 3.

EP 0 124 764 A1

- 1 -

## Biegsames Rohr für Rohrpostanlagen

Die Erfindung geht aus von einem biegsamen Rohr für Rohrpostanlagen mit einem luftdichten, flexiblen, schlauchartigen Mantel, der an zwei miteinander zu verbindenen steifen Fahrrohrabschnitten befestigbar ist und eine in einem Fahrrohrabschnitt ankommende Rohrpostbüchse in einen anderen Fahrrohrabschnitt weiterleitet.

Aus der Praxis von Rohrpostanlagen ist es bekannt, Kunststoffschläuche zu verwenden, um gegeneinander bewegliche Fahrrohrabschnitte luftdicht miteinander zu verbinden, wie dies beispielsweise beim Anschluß des schwenkbaren Fahrrohrabschnittes von Weichen und Rohrpostempfangs- oder -sendestationen der Fall ist. Der Kunststoffschlauch wird auf die beiden miteinander zu verbindenden Enden der gegeneinander beweglichen Fahrrohrstücke aufgeschoben und weist deswegen einen Innendurchmesser auf, der etwa dem Außendurchmesser der Fahrrohrstücke entspricht. Eine durch die Übergangsstelle zwischen den Fahrrohrstücken laufende Rohrpostbüchse, deren Außendurchmesser an den Innendurchmesser des Fahrrohres angepaßt ist, hat deshalb im Bereich des Verbindungsschlauches in der Regel ein um die Wandstärke des Fahrrohres größeres Spiel, weshalb die Rohrpostbüchse dazu neigt, mit ihren Dichtringen auf die Stirnkante des entsprechenden Fahrrohrstückes aufzulaufen, was eine Abnutzung der Dichtringe und eine unerwünschte Geräuschentwicklung beim Durchfahren der Rohrpostbüchse durch die Verbindungsstelle zur Folge hat.

0124764

Außerdem tritt wegen des erweiterten Lumens im Bereich der Verbindungsstelle kurzfristig ein Druckabfall auf, weil in erhöhtem Maße Luft an den Dichtringen der Rohrpostbüchse vorbeistreichen kann.

Schließlich können an der Übergangsstelle zwischen den Rohrstücken in dem Kunststoffschlauch Verformungen auftreten, so daß der Kunststoffschlauch seine kreisförmige Querschnittsgestalt in eine elliptische verändert, was dazu führt, daß möglicherweise die Rohrpostbüchse in dem die beiden Fahrrohrstücke verbindenden Schlauchabschnitt schwergängig ist und an Geschwindigkeit verliert.

Es wurde deshalb bereits versucht, der Querschnittsänderung dadurch entgegenzuwirken, daß in die Wandung des die beiden Rohrstücke verbindenden Schlauches eine Drahtspirale eingebettet ist, die den kreisförmigen Querschnitt des Verbindungsschlauches im gekrümmten Zustand aufrecht erhalten soll.

Hierbei läßt es sich jedoch nicht vermeiden, daß Schlauchmaterial zwischen einander benachbarten Windungen der Verstärkungsspirale nach innen eindringt und ein wellenförmiger Verlauf der Innenwand entsteht, der wiederum zu einer Geräuschentwicklung bei einer durchfahrenden Rohrpostbüchse führt. Das Problem des Auflaufens der Dichtringe auf die Stirnseite der Fahrrohrstücke kann auch hierdurch nicht vermieden werden.

Schließlich ist es bekannt, zum Verbinden der Stirnseiten gegeneinander beweglicher Fahrrohrstücke einen gewickelten Schlauch zu verwenden, dessen Wand von einem spiralig aufgewickelten Endlosprofil gebildet ist. Zwar läßt sich mit Hilfe eines solchen Schlauches der Durchmesser im Bereiche zwischen den Fahrrohrstücken verringern, indem die Schlauchenden gegeneinander gedreht werden, wodurch sich der Schlauch zuzieht, doch tritt hier in erhöhtem Maße die Gefahr des Klemmens von Rohrpostbüchsen in dem Verbindungsabschnitt auf. Darüber hinaus kann auch ein derartiger Schlauch nicht unmittelbar im Anschluß an die Stirnseite des Fahrrohrstückes auf den Innendurchmesser des Fahrrohres verringert werden, so daß auch hier wiederum die Rohrpostbüchsen dazu neigen, auf die Stirnkante des Fahrrohres aufzulaufen.

Aufgabe der Erfindung ist es deshalb, ein biegsames Rohr für Rohrpostanlagen zu schaffen, mit dem steife, im Winkel zueinander verlaufende oder parallel versetzte Fahrrohrstücke miteinander verbunden werden können, ohne daß eine Geräuschentwicklung auftritt, wenn eine Rohrpostbüchse hindurchfährt und ohne daß die Gefahr besteht, daß die Rohrpostbüchse mit ihren Dichtringen auf die Stirnkante des steifen Fahrrohrstückes aufläuft.

Zur Lösung dieser Aufgabe ist das biegsame Rohr für Rohrpostanlagen erfindungsgemäß durch die Merkmale des Hauptanspruches gekennzeichnet.

Durch die Verwendung eines oder mehrerer steifer Ringe in dem Mantel, die sich bei einer bevorzugten Ausführungsform ausschließlich in der Lücke zwischen den beiden durch das biegsame Rohr miteinander zu verbindenden Fahrrohrabschnitten befinden, wird eine exakte Führung einer durchfahrenden Rohrpostbüchse gewährleistet, und zwar ohne daß die Gefahr besteht, daß die Rohrpostbüchse aufgrund der Zentrifugalkraft oder anderer auf sie einwirkenden Kräfte mit ihren Dichtringen an die Stirnkante des anschließenden Fahrrohrabschnittes aufläuft. Ferner sorgen die in dem Mantel sitzenden Ringe dafür, daß das biegsame Rohr auch im gekrümmten Zustand seine ursprüngliche kreisförmige Querschnittsgestalt beibehält und nicht etwa elliptisch verformt wird. Eine Schwergängigkeit der Rohrpostbüchsen in dem biegsamen Rohr wird auf diese Weise wirksam verhindert.

Der Abstand der steifen Ringe voneinander ist dabei zweckmäßigerweise so gewählt, daß er auch bei auf den kleinsten zulässigen Krümmungsradius gebogenem biegsamem Rohr im Bereich des Außenbogens kleiner ist als die Breite der Dichtringe der verwendeten Rohrpostbüchsen, so daß jeder Dichtring in jedem Punkt seiner Bewegungsbahn von zumindest einem der steifen Ringe innerhalb des biegsamen Rohres geführt wird und nicht in die Lücke zwischen zwei Ringen fallen kann.

Ein besonders leichter und leiser Lauf der Rohrpostbüchsen wird erreicht, wenn der Innendurchmesser der steifen Ringe gleich dem Innendurchmesser des Fahrrohres ist.

Eine leichte Montage des biegsamen Rohres auf den zu verbindenden Fahrrohrabschnitten wird erzielt, wenn der Außendurchmesser der steifen Ringe gleich dem Innendurchmesser des Mantels ist, dessen Innendurchmesser wiederum im wesentlichen gleich dem Außendurchmesser des Fahrrohres ist. Dies hat außerdem den Vorteil, daß für den Mantel als Meterware gefertigter Schlauch verwendet werden kann, in den die Ringe ohne weiteres eingesetzt werden können.

Eine besondere Befestigung der Ringe in dem Mantel
ist entbehrlich, wenn der Abstand der Ringe voneinander derart bemessen ist, daß die Ringe bei kleinstem
vorgesehenem Krümmungsradius des biegsamen Rohres
auf der Innenseite der Krümmung aneinander anstoßen
und gegebenenfalls sogar auch an die Stirnseiten
der Fahrrohrstücke anstoßen, so daß sie sich gegenseitig in dem Mantel festlegen.

Um ein Verschieben der Ringe in dem Mantel zu vermeiden, können sie auch reibschlüssig in dem Mantel
gehalten sein. Eine derartige Anordnung ist vorteilhaft, wenn keine größeren in Axialrichtung wirkenden Kräfte auf die Ringe ausgeübt werden. Falls die
auftretenden Kräfte größer sind, werden die Ringe
zweckmäßigerweise an der Innenwand des Mantels befestigt, was durch Kleben oder Schweißen erfolgen
kann. Wenn die Ringe ebenso wie der Mantel aus Kunststoff bestehen, kann ein Ultraschallschweißen verwendet werden, so daß die Ringe punktuell mit dem
Mantel fest verbunden sind, was eine maximale Beweglichkeit des biegsamen Rohres gewährleistet.

Je nach geforderter Festigkeit kann der Mantel aus
einem durchgehenden einstückigen Kunststoffschlauch
bestehen oder der Mantel kann aus einem gewickelten
Schlauch bestehen, dessen Wand von einem spiralig
aufgewickelten Endlosprofil gebildet ist, das bei
einander benachbarten Gängen formschlüssig und in
Umfangsrichtung beweglich ineinandergreift. Im
letzteren Falle können die Ringe durch Zuziehen
des Schlauches infolge eines Verdrehens seiner Enden im Inneren festgeklemmt werden.

Gemäß weiterer Erfindung kann dieses biegsame Rohr
in Rohrpoststationen oder Weichen verwendet werden, um das Schwenkrohrstück mit dem Fahrrohr zu verbinden. Es ist aber auch möglich, das Schwenkrohrstück vollständig durch das erfindungsgemäße biegsame
Rohr zu ersetzen.

In der Zeichnung sind Ausführungsbeispiele des Gegenstandes der Erfindung dargestellt. Es zeigen:

Fig. 1 das biegsame Rohr gemäß der Erfindung mit
einem aus einem einstückigen Kunststoffschlauch bestehendem Mantel, in einem
perspektivischen Längsschnitt,

Fig. 2 das biegsame Rohr gemäß der Erfindung mit
einem aus einem gewickelten Schlauch bestehenden Mantel, in einem perspektivischen
Längsschnitt,

Fig. 3 das erfindungsgemäße biegsame Rohr nach den

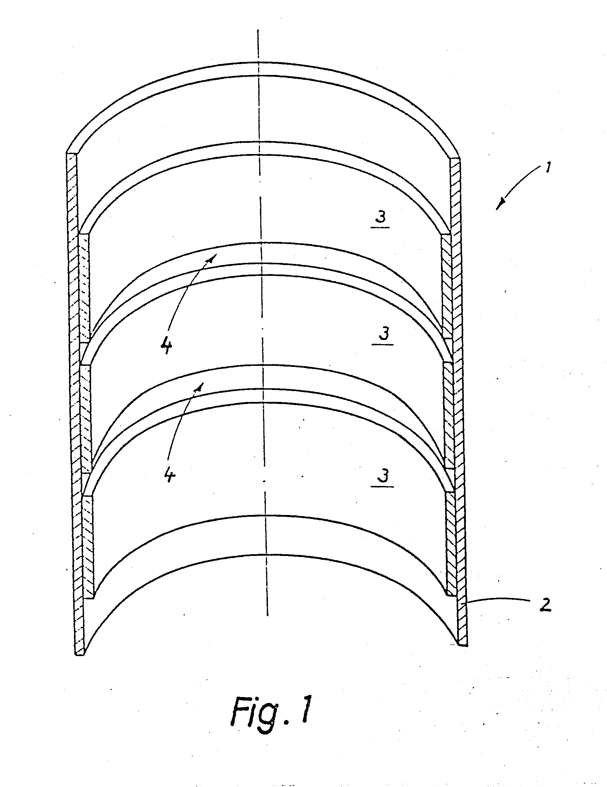

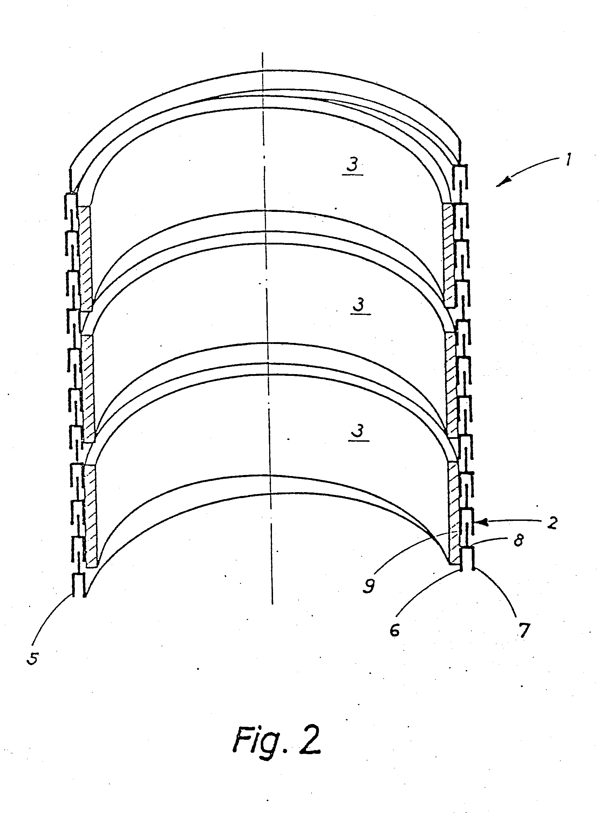

Fig. 1 oder 2 zum Ausgleich eines Parallelversatzes zwischen steifen Fahrrohrabschnitten und

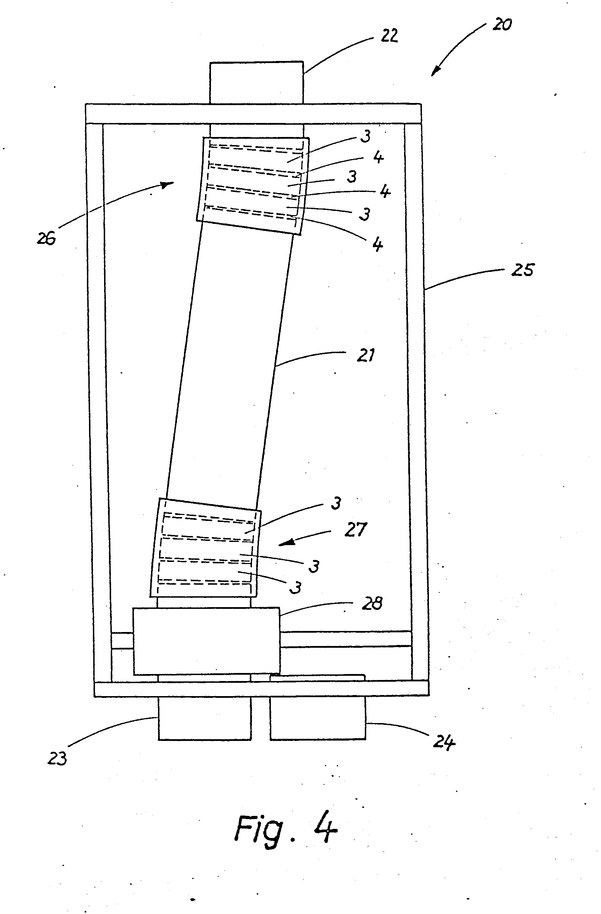

Fig. 4 eine Rohrpoststation oder Weiche, in der
das Schwenkrohrstück mit einem biegsamen
Rohr nach den Fig. 1 oder 2 an den zugehörigen Fahrrohrstumpf bzw. den Wechselschlitten luftdicht angeschlossen ist, in
einer Seitenansicht.

In Fig. 1 ist ein biegsames Rohr 1 für Rohrpostanlagen veranschaulicht, das einen luftdichten,flexiblen,schlauchartigen Mantel 2 aufweist, der aus einem durchgehenden einstückigen Kunststoffschlauch besteht. Im Inneren des Mantels 2 sitzen in Längsrichtung des Rohres 1 mehrere steife Ringe 3, die im Abstand zu- einander angeordnet sind. Der Innendurchmesser der steifen Ringe 3, die beispielsweise aus demselben Kunststoffmaterial wie das verwendete Fahrrohr bestehen, beispielweise ABS-Kunststoff, ist gleich dem Innendurchmesser des in Fig. 1 nicht weiter dargestellten Fahrrohres,während der Außendurchmesser der Ringe 3 gleich dem Außendurchmesser des in der jeweiligen Rohrpostanlage verwendeten Fahrrohres ist. Der Innendurchmesser des Mantels 2 hingegen ist gleich dem Außendurchmesser der Ringe 3, so daß diese spielfrei an der Innenwand des Mantels 2 anliegen, der bei dieser Bemessung leicht auf das entsprechende Ende des steifen Fahrrohres aufgeschoben und dort befestigt werden kann.

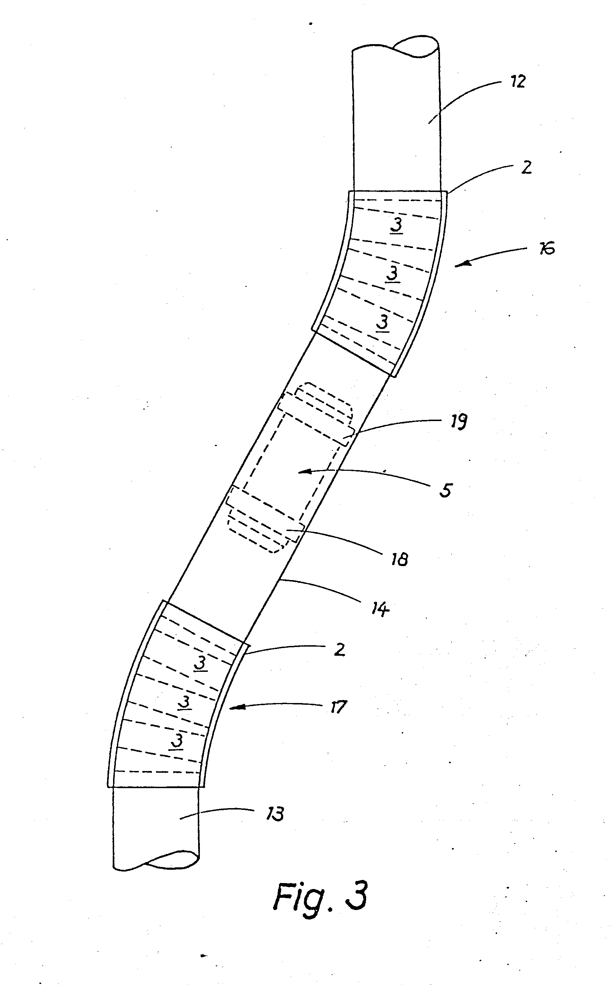

Im gestreckten Zustand des biegsamen Rohres 1 stehen die Ringe 3 im äquidistanten Abstand koaxial zueinander, so daß zwischen den einander gegenüberliegenden Stirnkanten zweier benachbarter Ringe 3 ein in Umfangsrichtung verlaufender,kreisringförmiger Spalt 4 entsteht. Dieser Spalt 4 bzw. der Abstand der Ringe 3 voneinander ist derart bemessen, daß der Spalt 4 in Achsrichtung des biegsamen Rohres 1 gemessen größer ist als die in entsprechender Richtung gemessene Erstreckung der Dichtringe der verwendeten Rohrpostbüchsen, wie sie beispielsweise in Fig. 3 bei 5 veranschaulicht ist.

Da dieses Spaltmaß auch eingehalten werden soll, wenn das biegsame Rohr 1 auf den kleinsten in der jeweiligen Rohrpostanlage zulässigen Krümmungsradius gebogen ist, bei dem die Ringe 3 aus einer zueinander parallelen Orientierung in eine Lage überführt werden, bei der die orthogonalen Querschnitte zweier benachbarter Ringe 3 in einem Winkel größer 0° zueinander verlaufen, muß die Breite des Spaltes 4 bei gestrecktem biegsamem Rohr 1 entsprechend klein bemessen sein.

Für die Befestigung der kreisförmigen Ringe 3 in dem Mantel 2 stehen mehrere Möglichkeiten zur Verfügung:

Wenn von einer durchfahrenden Rohrpostbüchse nur geringe in Achsrichtung wirkende Kräfte auf die Ringe 3 übertragen werden, genügt es, wenn sie aufgrund der Eigenelastizität des flexiblen, schlauchartigen Mantels 2 festgehalten werden. Eine solche Befestigung wird erreicht, wenn der Innendurchmesser des flexiblen Mantels 2 kleiner ist als der Außendurchmesser der Ringe 3, die dann beim Einsetzen in den Mantel 2 diesen entsprechend aufweiten und so gehalten werden.

Treten größere, in Achsrichtung wirksame Kräfte auf, ist es zweckmäßig, wenn jeder der Ringe 3 an dem Mantel 2 befestigt ist, beispielsweise durch punktweises Verkleben oder Verschweißen mittels Ultraschall. Die punktuelle Befestigung der Ringe 3 an dem Mantel 2 hat dabei den Vorteil, daß eine maximale Flexibilität des biegsamen Rohres 1 erhalten bleibt, weil lediglich die Verbindungspunkte oder -flächen des Mantels 2 mit den steifen Ringen 3 ebenfalls steif werden und ihre Flexibilität einbüßen.

Schließlich können die Ringe 3 innerhalb des Mantels 2 auch dadurch festgelegt werden, daß sie bei auf den entsprechend gewünschten Radius gebogenem, flexiblem Rohr 1 entlang dem Innenbogen mit ihren Stirnseiten aneinanderstoßen und sich so gegenseitig an einer Bewegung in Achsrichtung des biegsamen Rohres 1 hindern. Hierzu ist es lediglich erforderlich, die Ringe 3 mit entsprechend kleinem Spalt 4 in den flexiblen Mantel 2 einzusetzen.

In Fig. 2 ist ein weiteres Ausführungsbeispiel des biegsamen Rohres 1 veranschaulicht, bei dem wiederum in dem Mantel 2 kreisförmige Ringe 3 sitzen, die bei gestrecktem biegsamem Rohr 1, wie bei dem Ausführungsbeispiel nach Fig. 1, koaxial und im Abstand zueinander angeordnet sind.

Abweichend von dem Ausführungsbeispiel nach Fig. 1 besteht der Mantel 2 jedoch nicht aus einem einstückigen flexiblen Kunststoffschlauch, sondern aus einem gewickelten Schlauch, dessen Wand von einem spiralig aufgewickelten Endlosprofil 5 gebildet ist. Wie aus Fig. 2 ersichtlich, greifen einander benachbarte Gänge bei dem spiralig aufgewickelten Endlosprofil 5 formschlüssig und in Umfangsrichtung gegeneinander beweglich ineinander. Das Endlosprofil 5 hat einen im wesentlichen U-förmigen Querschnitt mit zwei zueinander parallelen Schenkel 6 und 7, die durch einen Steg 8 miteinander verbunden sind. An den Steg 8 ist ein Schenkel 9 angeformt, der, bezogen auf den Steg 8, in die entgegengesetzte Richtung weist wie die beiden Schenkel 6 und 7, so daß etwa die Gestalt eines Y erhalten wird. Im fertig gewickelten Zustand greift dann der Schenkel 9 luftdicht und formschlüssig zwischen die parallel verlaufenden Schenkel 6 und 7, zwischen denen er mittels nicht weiter veranschaulichter Hinterschneidungen verhakt ist.

Die Verwendung eines solchen Mantels 2 aus einem gewickelten Schlauch hat den Vorzug, daß dieRinge 3 zunächst besonders leicht eingesetzt werden können und anschließend festgeklemmt werden, indem die beiden Schlauchenden in bekannter Weise gegeneinander verdreht werden, wodurch sich eine Änderung des Innendurchmessers des gewickelten Schlauches ergibt.

In Fig. 3 ist die Verwendung des erfindungsgemäßen biegsamen Rohres 1 zum Ausgleich eines Parallelversatzes zwischen zwei Fahrrohrstücken 12 und 13 veranschaulicht. Hierzu wird ein kurzes steifes Fahrrohrstück 14 entsprechender Länge mittels zweier biegsamer Rohrstücke 16 und 17 beidenends an die beiden offenen Enden der Rohrstücke 12 und 13 angeschlossen. Die beiden biegsamen Rohrabschnitte 16 und 17 bestehen aus dem in den Fig. 1 und 2 veranschaulichten erfindungsgemäßen biegsamen Rohr 1, wobei der flexible Mantel 2 einenends auf das Fahrrohr 12 bzw. das Fahrrohr 13 und anderenends auf das steife Fahrrohrverbindungsstück 14 aufgeschoben ist. Im Inneren des Mantels 2 sitzen in der Lücke zwischen dem Fahrrohrstück 14 und dem Fahrrohrstück 12 jeweils ortsfest kreisförmige Ringe 3, wie dies oben anhand der Fig. 1 und 2 erläutert ist. Für die Verbindung zwischen dem Fahrrohrstück 14 und dem Fahrrohrstück 13 mittels des biegsamen Rohrstückes 17 gilt das entsprechende.

Wenn nunmehr durch das Fahrrohrstück 12 eine Rohrpostbüchse 5 ankommt, die in dem Fahrrohrstück 12 mittels ihrer Dichtringe 18 und 19 abgedichtet geführt ist, so wird die Rohrpostbüchse 5 bei ihrem

0124764

Austritt aus dem Fahrrohrstück 12 durch die in dem Mantel 2 sitzenden Ringe 3 in das Fahrrohrstück 14 geführt. Dabei liegen die Dichtringe 18 und 19 aufgrund des gewählten Abstandes zwischen den Ringen 3 immer auf wenigstens einem der Ringe 3 bzw. der Innenwand entweder des Fahrrohrstückes 12 oder des Fahrrohrstückes 14 auf, so daß in keinem Falle die Dichtringe 18 und 19 auf die Stirnkante der Ringe 3 oder des Fahrrohrstückes 12 bzw. des Fahrrohrstückes 14 auftreffen können. Ein vorteilhafter Abstand der Ringe voneinander im Bereiche des Außenbogens beträgt dabei etwa 10 mm.

In Fig. 4 ist eine Rohrpostweiche 20 mit einem schwenkbaren Rohrstück 21 gezeigt, durch das wahlweise ein in die Rohrpoststation 20 einmündendes, lediglich abschnittsweise veranschaulichtes Fahrrohr 22 entweder mit einem Fahrrohr 23 oder einem Fahrrohr 24 verbunden werden kann, die beide ebenfalls in das Gehäuse 25 der Rohrpoststation 20 einmünden und lediglich abschnittsweise veranschaulicht sind. Das Schwenkrohrstück 21 ist einenends bei 26 über das erfindungsgemäße biegsame Rohr 1 mit dem Fahrrohr 22 und anderenends bei 27 ebenfalls über das erfindungsgemäße biegsame Rohr 1 mit einem in dem Gehäuse 25 längsverschieblich geführten Schlitten 28 verbunden. In dem längsverschieblich geführten Schlitten 28 sitzt ein Rohrstück 29, das wahlweise mittels des Schlittens 28 mit dem Fahrrohr 23 oder dem Fahrrohr 24 abgedichtet ausgerichtet werden kann, wobei das Schwenkrohrstück 21 eine entsprechende, durch das erfindungsgemäße biegsame Rohr 1 bei 26 und 27 aufgenommene Schwenkbewegung ausführt. Die Bemessung des Spaltes 4 zwischen den einzelnen Ringen 3 ist hierbei so gewählt, daß in der jeweiligen Endstellung des Schwenkrohrstückes 21 die Ringe 3 auf der Seite des jeweils entstehenden Innenbogens aneinander und an den Stirnflächen des Schwenkrohres 21 bzw. des Fahrrohres 22 und dem Schlitten 28 anliegen und hierdurch in ihrer jeweiligen Lage gehalten werden.

Es ist ohne weiteres verständlich, daß eine ähnliche Anordnung auch bei einer Rohrpostempfangs- oder -sendestation Anwendung finden kann, sofern die Station ähnlich aufgebaut ist, wie die in Fig. 4 gezeigte Rohrpostweiche 20. Gemäß einem weiteren Anwendungsbeispiel kann das steife Schwenkrohrstück 21, wie es in Fig. 4 dargestellt ist, auch weggelassen werden und das Fahrrohr 22 mit dem Schlitten 28 auch unmittelbar über ein durchgehendes biegsames Rohr verbunden sein, wie es anhand der Fig. 1 und 2 erläutert ist.

0124764

- 13 -

<u>Patentansprüche</u>

1. Biegsames Rohr für Rohrpostanlagen mit einem luftdichten, flexiblen, schlauchartigen Mantel, der an zwei miteinander zu verbindenden steifen Fahrrohrabschnitten befestigbar ist und eine in einem Fahrrohrabschnitt ankommende Rohrpostbüchse in einen anderen Fahrrohrabschnitt weiterleitet, dadurch gekennzeichnet, daß der Mantel (2) einen oder mehrere kreisförmige steife Ringe (3) enthält, die sich zumindest in der Lücke zwischen den beiden durch das biegsame Rohr (1) miteinander verbundenen Fahrrohrabschnitten (12, 13, 14, 21, 22, 23, 24) befinden und im gestreckten Zustand des biegsamen Rohres (1) in dessen Achsrichtung koaxial und im Abstand zueinander angeordnet sind.

2. Biegsames Rohr nach Anspruch 1, dadurch gekennzeichnet, daß der Innendurchmesser der steifen Ringe (3) gleich dem Innendurchmesser des Fahrrohres (12, 13, 14, 21, 22, 23, 24) ist.

3. Biegsames Rohr nach Anspruch 1, dadurch gekennzeichnet, daß der Außendurchmesser der steifen Ringe (3) gleich dem Innendurchmesser des Mantels (2) ist, dessen Innendurchmesser wiederum im we-

- 14 -

sentlichen gleich dem Außendurchmesser des Fahrrohres (12, 13, 14, 21, 22, 23, 24) ist.

4. Biegsames Rohr nach Anspruch 1, dadurch gekennzeichnet, daß der Abstand der Ringe (3) voneinander derart bemessen ist, daß die Ringe (3) bei
kleinstem vorgegebenem Krümmungsradius des biegsamen Rohres (1) auf der Innenseite der Krümmung
aneinanderstoßen.

5. Biegsames Rohr nach Anspruch 1, dadurch gekennzeichnet, daß die Ringe (3) reibschlüssig in dem
Mantel (2) gehalten sind.

6. Biegsames Rohr nach Anspruch 1, dadurch gekennzeichnet, daß die Ringe (3) an der Innenwand des
Mantels (2) befestigt sind.

7. Biegsames Rohr nach Anspruch 6, dadurch gekennzeichnet, daß die Ringe (3) in dem Mantel (2)
durch Kleben befestigt sind.

8. Biegsames Rohr nach Anspruch 6, dadurch gekennzeichnet, daß die Ringe (3) in dem Mantel (2)
durch Schweißen befestigt sind.

9. Biegsames Rohr nach Anspruch 1, dadurch gekennzeichnet, daß der Mantel (2) aus einem durchgehenden einstückigen Kunststoffschlauch besteht.

10. Biegsames Rohr nach Anspruch 1, dadurch gekennzeichnet, daß der Mantel (2) aus einem gewickelten Schlauch besteht, dessen Wand von einem spiralig aufgewickelten Endlosprofil (5) gebildet ist,
das bei einander benachbarten Gängen formschlüssig und in Umfangsrichtung beweglich ineinandergreift.

11. Biegsames Rohr nach einem der Ansprüche 1 bis 10, gekennzeichnet durch die Verwendung in einer Rohrpoststation oder Weiche (20) mit einem aus dem Zuge des Fahrrohres (22, 23, 24) heraus schwenkbar gelagerten Schwenkrohrstück (21) zum luftdichten und beweglichen Verbinden zumindest eines Endes des Schwenkrohrestückes (21) mit dem zugehörigen Ende des Fahrrohres (22).

12. Biegsames Rohr nach einem der Ansprüche 1 bis 10, gekennzeichnet durch die Verwendung in einer Rohrpoststation oder Weiche (20) mit einem aus dem Zuge des Fahrrohres (22) heraus schwenkbar gelagerten Schwenkrohrstück (21), das vollständig durch das biegsame Rohr (1) gebildet ist.

Fig. 1

Fig. 2

Fig. 3

Fig. 4

## Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | US-A-3 868 071 (WEAVER)<br><br>.* Spalte 2, Zeile 65 - Spalte 3, Zeile 57; Figuren 3, 4 *<br><br>--- | 1,9,11 ,12 | B 65 G 51/24 |
| A | DE-A-2 404 299 (TONNE)<br>* Seite 2, Zeilen 4-19 *<br><br>--- | 1 | |
| A | GB-A-1 566 556 (LAMSON)<br><br>--- | | |
| A | DE-A-2 338 774 (SIEMENS)<br><br>--- | | |
| A | FR-A-1 439 434 (ENI)<br><br>--- | | |
| A | GB-A- 886 316 (ASSOCIATED ELECTRICAL INDUSTRIES)<br><br>--- | | RECHERCHIERTE SACHGEBIETE (Int. Cl. 3)<br><br>B 65 G 51/00<br>F 16 K 11/00 |
| A | CH-A- 386 789 (PUNTENER)<br><br>----- | | |

Der vorliegende Recherchenbericht wurde für alle Patentansprüche erstellt.

| Recherchenort | Abschlußdatum der Recherche | Prüfer |
|---|---|---|
| BERLIN | 28-06-1984 | SCHLABBACH M |